# FASCICULE DE BREVET EUROPEEN

(11) **EP 2 143 053 B1**
(45) Date de publication et mention de la délivrance du brevet: **05.06.2013**
(21) Numéro de dépôt: 08799906.6
(22) Date de dépôt: 28.03.2008
(51) Int. Cl.: G06Q 20/00, G06Q 20/12, G06Q 20/32, G06Q 20/04

(54) **PROCÉDÉ DE COMMUNICATION ET DE TRANSMISSION D'UN MESSAGE CONCERNANT UNE TRANSACTION D'UNE APPLICATION SANS CONTACT, TERMINAL, MODULE SÉCURISÉ ET SYSTÈME ASSOCIÉS**
VERFAHREN ZUR ERSTELLUNG UND ÜBERMITTLUNG EINER MELDUNG ÜBER EINE TRANSAKTION FÜR EINE KONTAKTLOSE ANWENDUNG SOWIE ENDGERÄT, GESICHERTE MODULE UND ENTSPRECHENDE SYSTEME DAFÜR
METHOD FOR COMMUNICATING AND TRANSMITTING A MESSAGE RELATING TO A TRANSACTION FOR A CONTACTLESS APPLICATION, TERMINAL, SECURED MODULE AND ASSOCIATED SYSTEMS

(30) Priorité: 30.03.2007 FR 0754194
(43) Date de publication de la demande: 13.01.2010
(73) Titulaire: FRANCE TELECOM, 75015 Paris (FR)
(72) Inventeur: PICQUENOT, David, F-14280 Saint Contest (FR); FOURREAU, Laurent, F-14210 Evrecy (FR)
(86) Numéro de dépôt international: PCT/FR2008/050555
(87) Numéro de publication internationale: WO 2008/129225

(56) Documents cités:
- WO-A-00/75885
- US-A1- 2003 028 435
- US-A1- 2005 033 688
- US-A1- 2005 156 026
- US-A1- 2005 251 454
- MOBILE ELECTRONIC TRANSACTIONS LTD: "MeT Ticketing Specification, Version 1.0" [Online] 22 novembre 2002 (2002-11-22), , XP002319759 Extrait de l'Internet: URL:http://www.mobiletransaction.org/docum ents.html> [extrait le 2005-03-02] le document en entier
- MOBILE ELECTRONIC TRANSACTIONS LTD: "MeT Core Specification, Version 1.2" [Online] 12 novembre 2002 (2002-11-12), , XP002319758 Extrait de l'Internet: URL:http://www.mobiletransaction.org/docum ents.html> [extrait le 2005-03-02] le document en entier

## Description

La présente invention se rapporte au domaine des télécommunications, et plus particulièrement à celui de la gestion des applications d'un terminal mobile.

La plupart des terminaux mobiles existants permettent, non seulement d'établir des communications téléphoniques, mais également d'exécuter un certain nombre d'applications téléchargées dans un module sécurisé du terminal. Ce module sécurisé peut être un module mémoire du terminal ou un support amovible (par exemple une carte d'abonné UICC pour "Universal Integrated Circuit Card") inséré dans le terminal. Certains de ces terminaux sont de plus équipés d'un module spécifique, dit "module sans contact", permettant au terminal mobile de dialoguer et/ou de réaliser des transactions sans contact avec des bornes dites "bornes sans contact". Plus précisément, ce module permet le transfert bidirectionnel de données entre une borne sans contact et une application téléchargée. Une telle application est, par exemple, une application dans le domaine des transports où le passage du terminal mobile devant une borne permet de valider l'accès de l'utilisateur au moyen de transport.

L'application téléchargée étant une application esclave, pilotée par la borne sans contact, la fin de la transaction n'est pas facilement identifiable par le terminal mobile et de ce fait, ce terminal peut difficilement informer le porteur du terminal du résultat de la transaction. La méthode utilisée actuellement consiste à configurer le terminal mobile pour qu'il interroge à intervalles réguliers les différentes applications installées; ces applications transmettant en retour, des informations si une transaction a eu lieu. L'interrogation par le terminal mobile et la transaction étant deux processus décorrélés, le délai d'affichage suite à une transaction n'est pas maitrisé et l'affichage n'est pas effectué en temps réel. Ce délai d'affichage peut être réduit en augmentant le nombre d'interrogations mais cela pose des problèmes de consommation électrique lorsque les applications sont installées sur un module sécurisé amovible inséré dans le terminal car ce module doit être alimenté électriquement lors de chaque interrogation.

La présente invention permet de pallier ce problème en proposant une solution permettant d'informer le porteur du terminal mobile, en temps réel, du résultat d'une transaction sans-contact.

A cet effet, la présente invention propose un procédé de communication d'un message concernant une transaction d'une application sans contact effectuée entre un terminal mobile équipé d'un module sans contact et d'un module sécurisé et un équipement, ladite transaction étant initialisée par ledit équipement, le procédé comportant les étapes stipulées par la revendication 1

Ainsi, le procédé selon l'invention permet au porteur du terminal mobile d'être informé par le terminal mobile du résultat d'une transaction dès qu'elle est terminée. De plus, le message d'information lui permet de savoir quelle application a réalisé la transaction. Cette information est notamment utile lorsque plusieurs applications sont installées sur le terminal mobile.

Dans un mode de réalisation selon l'invention, l'application est mémorisée dans un module sécurisé du terminal mobile et l'étape d'obtention comporte une étape d'envoi au module sécurisé d'une information de détection de fin de transaction et une étape de réception dudit message et d'une commande d'interface homme machine. Ainsi, les informations concernant une application sont gérées par une seule entité, le module sécurisé. Ceci permet d'assurer une meilleure sécurité de l'application.

Dans un mode de réalisation, l'information de détection de fin de transaction contient un identifiant correspondant à l'application associée à la transaction. Cet identifiant est soit stocké en cours de transaction, soit transmis par l'application au module sans contact en fin de transaction. Cet identifiant permet, en fin de transaction, d'identifier l'application liée à la transaction venant d'être effectuée parmi l'ensemble des applications stockées dans le terminal mobile.

Dans un mode de réalisation, le module sécurisé est une carte d'abonné insérée dans le terminal mobile.

Dans un mode de réalisation de l'invention, l'information de fin de transaction comporte des données de l'application mises à jour suite à l'exécution de la transaction. L'utilisateur du terminal mobile est ainsi informé des modifications intervenues lors de la transaction.

En fin de transaction, le message obtenu par le procédé de l'invention est transmis au porteur du terminal mobile via une interface homme machine présente sur le terminal. Dans un mode de réalisation, l'étape de communication est une étape d'affichage dudit message sur un écran du terminal mobile et/ou une étape de diffusion d'un message vocal contenant ledit message par le haut parleur du terminal mobile.

L'invention concerne également un procédé selon la revendication 1 le procédé comprenant les étapes suivantes :
- identification de l'application (API)

Dans un mode de réalisation, l'étape d'identification comporte une étape de lecture d'un identifiant mémorisé au cours de la transaction. Dans un mode de réalisation, l'identifiant est stocké dans une mémoire du module sécurisé en cours de transaction et l'étape d'identification comporte une étape de lecture de cet identifiant dans la mémoire. Dans un autre mode de réalisation, l'identifiant est stocké dans une mémoire du module sans contact en cours de transaction et inséré dans l'information de détection de fin de détection transmise du module sans contact au module sécurisé. Ces modes de réalisation présentent l'avantage de ne pas nécessiter de modification de l'application.

Dans encore un autre mode de réalisation, l'information de détection de fin de transaction contient une adresse d'un programme lié à l'application, l'adresse étant fournie par l'application au module sans contact en fin de transaction. Ainsi, il n'est pas nécessaire de stocker un identifiant en cours de transaction. Les transactions "sans contact" sont toujours effectuées en temps très limité et l'insertion d'une commande supplémentaire de mémorisation en cours de transaction peut être préjudiciable au bon déroulement de la transaction. Ce mode de réalisation permet d'éviter ce genre de problème.

L'invention concerne également un terminal mobile selon la revendication 11.

L'invention concerne également un système selon la revendication 12

D'autres particularités et avantages de la présente invention apparaitront dans la description suivante d'un mode de réalisation donné à titre d'exemple non limitatif, en référence aux dessins annexés, dans lesquels :
- la figure 1 est un schéma général présentant le contexte de l'invention
- la figure 2 est un schéma illustrant les différents échanges lors d'une transaction sans contact
- la figure 3 est un schéma illustrant les différentes étapes du procédé de l'invention
- la figure 4 est un schéma illustrant les différentes étapes du procédé selon un premier mode de réalisation de l'invention
- la figure 5 est un schéma illustrant les différentes étapes du procédé selon un deuxième mode de réalisation de l'invention
- la figure 6 est un schéma bloc représentant un système selon un mode de réalisation de l'invention.

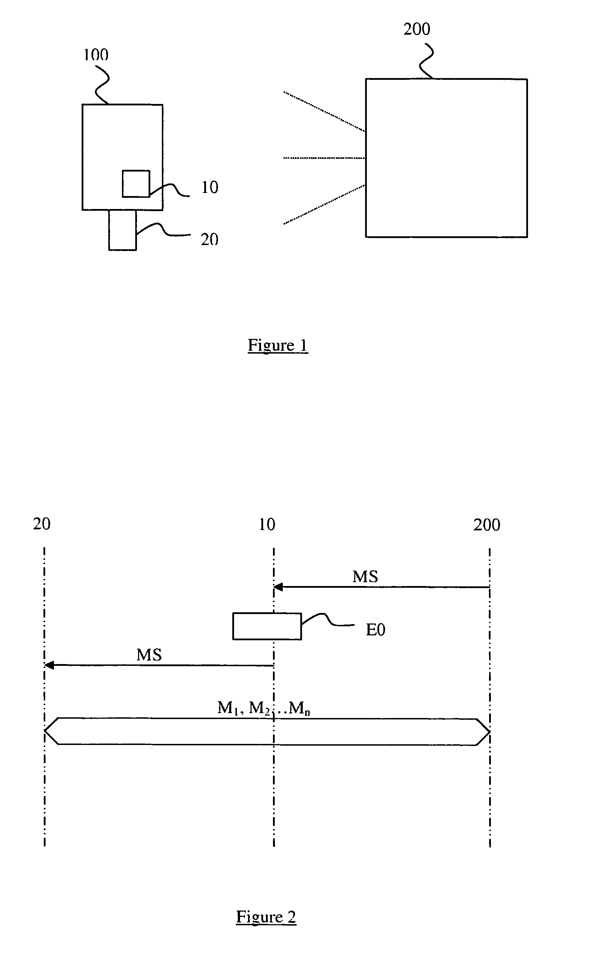

On va maintenant décrire en référence à la figure 1 un mode de réalisation de l'invention dans lequel un utilisateur dispose d'un terminal mobile 100 sur lequel plusieurs applications ont été installées. Ce terminal mobile est par exemple un téléphone mobile ou un PDA (pour "Personal Digital Assistant"). Ce terminal mobile 100 comporte un module de communication sans contact 10 permettant un dialogue entre le terminal 100 et un équipement 200 appelé par la suite "borne sans contact". Le module sans contact est par exemple un module compatible NFC (pour "Near Field Communication").

Le terminal mobile 100 comporte également un module sécurisé 20 qui est une carte d'abonné de type UICC (pour "Universal Integrated Circuit Card"). A titre d'alternative, ce module peut être une zone mémoire sécurisée du terminal mobile ou un support amovible d'un autre type (par exemple une carte d'abonné de type SIM ou une carte à mémoire (SD card, Embeded Secure controler ...)).

Une ou plusieurs applications (AP1, AP2...) ont été stockées dans la mémoire de la carte d'abonné. Parmi ces applications, une ou plusieurs sont des applications sans contact et fonctionnent en utilisant le module sans contact 10. Une telle application est, par exemple, une application de contrôle d'accès à un transport en commun. Cette application sera alors utilisée à chaque fois que le porteur du mobile voudra accéder à ce transport. A chaque utilisation, un dialogue entre l'application stockée sur la carte d'abonné 20 et une borne sans contact 200 installée à l'entrée du moyen de transport permet à la borne de vérifier que le porteur du mobile est autorisé à emprunter ce moyen de transport. Ce dialogue permet par exemple de vérifier que le porteur du mobile possède un abonnement valide pour ce moyen de transport ou de décrémenter un nombre de tickets stockés dans la carte d'abonné. Ce dialogue entre la carte d'abonné 20 et la borne sans contact 200 est effectué via le module sans contact 10.

De façon connue, la borne sans contact 200 émet un champ magnétique. Lorsque l'utilisateur du mobile se présente à l'entrée du moyen de transport, son terminal mobile entre dans le champ magnétique émis par la borne 200. Une transaction est alors effectuée entre l'application sélectionnée présente sur la carte d'abonné du terminal mobile et la borne 200. Plus précisément, comme décrit sur la figure 2, lors de l'entrée du terminal mobile dans le champ magnétique de la borne sans contact, le module sans contact reçoit de la borne sans contact un message MS de sélection (select AID) contenant l'identifiant AID1 d'une application AP1 et le transmet à la carte d'abonné. Lors de la réception de ce message MS, la carte d'abonné commande l'exécution de l'application AP1 sélectionnée. L'échange des messages entre le module sans contact et la carte d'abonné s'effectue de façon classique, par exemple en utilisant le protocole SWP pour "Single Wire Protocol" ou l'interface S²C pour "SigIn-SigOut-Connection". En fonction de l'application sélectionnée, un certain nombre de messages (M1, M2, ...Mn) vont ensuite être échangés entre l'application et la borne sans contact.

Dans le mode de réalisation décrit, après avoir reçu le message de sélection et avant de commander l'exécution de l'application, la carte d'abonné, au cours d'une étape E0, enregistre dans une mémoire temporaire T de la carte d'abonné 20, l'identifiant AID1 de l'application sélectionnée AP1. A titre d'alternative, cet enregistrement de l'identifiant peut être effectué après l'envoi de la commande d'exécution de l'application ou au cours de la transaction.

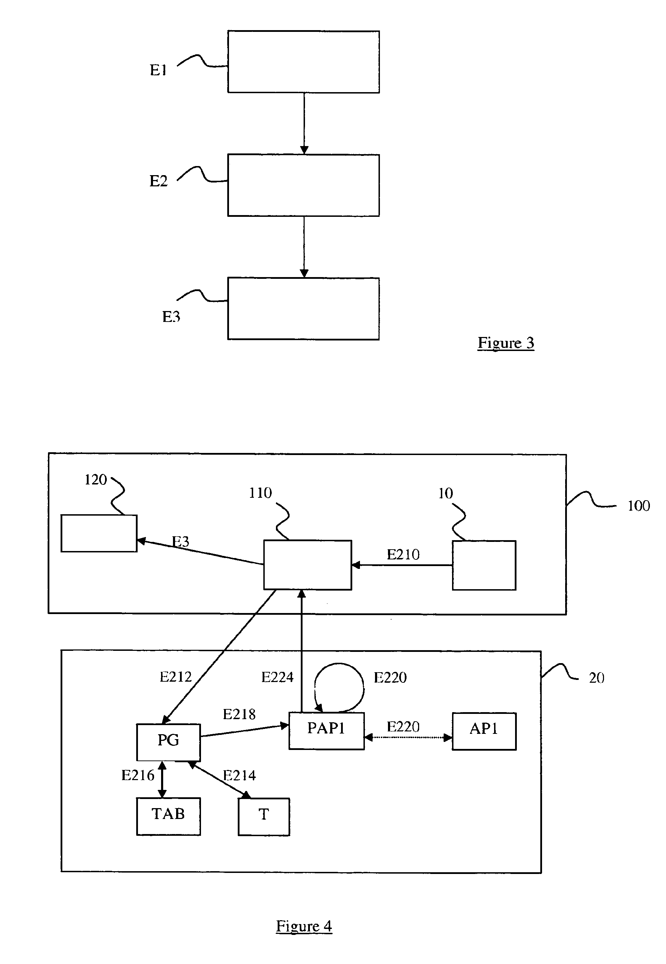

Nous allons maintenant décrire les principales étapes du procédé selon l'invention, en référence à la figure 3. Ces étapes font suite à l'échange des messages (M1, M2, ...Mn). Lors d'une étape E1, le module sans contact détecte la fin de la transaction. La fin de transaction est provoquée par une rupture du champ magnétique entre la borne et le terminal, le terminal n'étant plus présent dans le champ émis par la borne ou éventuellement parce que la borne n'émet plus ce champ. Plus précisément, cette rupture est détectée par un déclencheur (ou "trigger" en anglais) ajouté ou intégré au module sans contact.

A titre d'alternative, le champ magnétique émis par la borne est maintenu et la fin de transaction est détectée par la réception par le module sans contact d'un message de fin de transaction émis par la borne (par exemple un message Disconnect ou Deselect ISO 14443-3).

L'étape E1 est suivie d'une étape E2 d'obtention d'un message contenant au moins une information identifiant l'application sélectionnée et une information de fin de transaction.

Le message obtenu est ensuite communiqué au porteur du mobile, via l'écran du terminal mobile, lors d'une étape E3. A titre d'alternative, la communication peut être effectuée via le haut parleur du terminal.

Nous allons maintenant décrire plus précisément l'étape E2 selon un premier mode de réalisation, en référence à la figure 4.

Dans ce mode de réalisation, le terminal mobile est équipé d'un navigateur WEB 110. Ce navigateur permet d'accéder aux pages Web stockées dans la carte d'abonné. Un serveur HTTP est hébergé sur la carte d'abonné. La technologie utilisée est par exemple SCWS (pour "SmartCard WEB Server") en cours de normalisation à l'OMA (Open Mobile Alliance) au sein du groupe OMA SEC-Smart Card Technology sub-working group (SEC-SCT). Cette technologie permet au terminal mobile de lancer une application stockée dans la carte d'abonné, à partir d'un navigateur WEB.

Lors d'une première sous étape E210, suite à la détection de la fin de la transaction, le module de communication sans contact 10 envoie au navigateur Web du terminal mobile une information de détection de fin de transaction. Cette information est une commande permettant de lancer le navigateur Web du terminal mobile. Elle contient, en paramètre, l'adresse d'un programme PG de la carte d'abonné. Cette commande et cette adresse ont été stockées préalablement dans le module sans contact 10. Lors de l'étape suivante E212, sur réception de cette information, le navigateur, via le SCWS, redirige la commande vers la carte d'abonné permettant ainsi le lancement du programme PG. Plus précisément, l'adresse du programme PG est une url correspondant à un programme PG de la carte d'abonné commun à toutes les applications. Dans une sous étape E214, la carte d'abonné procède à la lecture de l'identifiant AID1 enregistré, lors de la transaction, dans la mémoire temporaire T. Par exemple, il peut être enregistré dans un EF (Elementary File)). Dans une sous étape E216, l'adresse d'un second programme PAP1, lié à l'application AP1, est déterminée par lecture dans une table de correspondance TAB mettant en correspondance chaque identifiant d'application avec une adresse d'un sous programme. Cette adresse est également une url. Lors d'une sous étape E218, l'emploi d'une commande de redirection permet l'exécution du programme stocké à partir de l'adresse PAP1. Ce programme est spécifique à l'application sélectionnée.

Lors d'une étape E220, ce programme détermine le message destiné au porteur du terminal. Ce message contient une information permettant au porteur d'identifier l'application qui vient d'être utilisée. Cette information stockée dans le programme PAP1 est une information sous forme de texte, par exemple "bus Caen". Le message contient également une information de fin de transaction. Cette information de fin de transaction est par exemple une information stockée dans le programme sous forme de texte, par exemple, "transaction terminée". Dans un autre mode de réalisation, le message de fin de transaction peut contenir une information de mise à jour de l'application. Pour obtenir cette information, le programme PAP1 interroge l'application AP1 liée à ce programme qui, en retour, lui fournit l'information demandée. Par exemple, le programme PAP1 obtient ainsi le nombre de tickets du bus achetés par le porteur et non encore utilisés. L'information obtenue est ensuite insérée dans un message texte par le programme PAP1. Par exemple, l'information de fin de transaction est "transaction terminée - Il vous reste 9 tickets". A titre d'alternative, l'information de fin de transaction peut implicitement indiquer que la transaction est terminée; par exemple l'information de fin de transaction peut être : "il vous reste 9 tickets". L'information identifiant l'application et l'information de fin de transaction sont ensuite insérées dans un même message.

Lors d'une étape E224, le message est transmis avec une commande d'affichage au navigateur Web 110 du terminal mobile. Dans le mode de réalisation décrit ici, la commande d'affichage et le message à afficher sont transmis dans une page XHTML.

Lors de l'étape E3 suivante, le navigateur Web s'adresse, de façon classique, à l'interface homme machine 120 du terminal mobile pour commander l'affichage du message sur l'écran du terminal mobile.

A titre d'alternative, l'identifiant de l'application mémorisé lors de l'étape E0 n'est pas enregistré dans la carte d'abonné mais dans une mémoire du module sans contact. Il est alors transmis en paramètre avec l'adresse du programme PG lors des étapes E210 et E212 et l'étape E214 de lecture d'identifiant en mémoire est remplacée par une étape de réception de cet identifiant par la carte d'abonné.

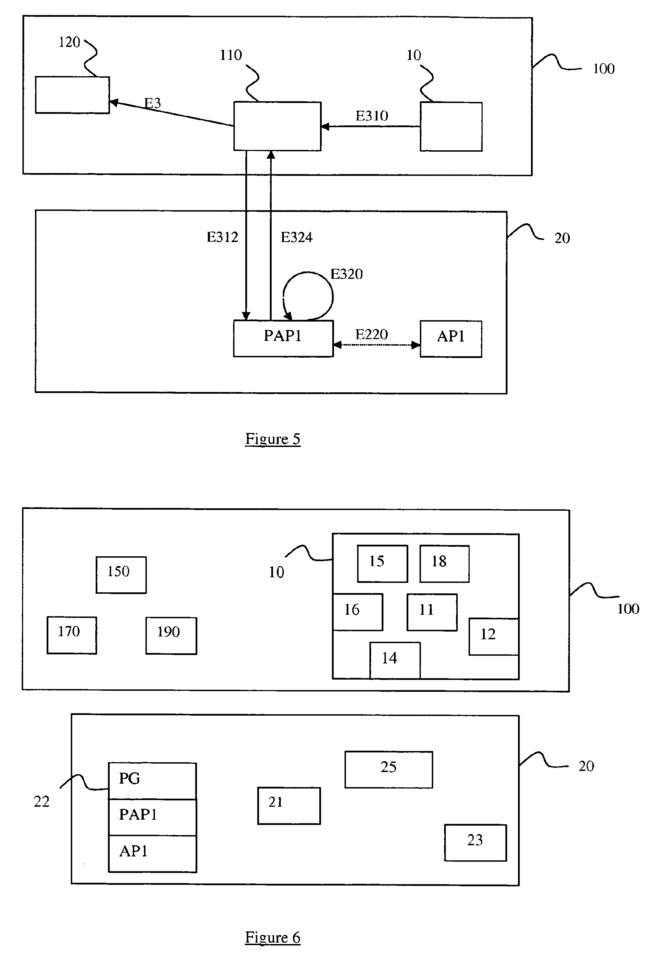

Nous allons maintenant décrire un deuxième mode de réalisation, en référence à la figure 5. Dans ce mode de réalisation, l'identifiant AID1 de l'application AP1 n'est pas mémorisé en cours de transaction et les étapes E1 et E3 sont identiques à celles du premier mode de réalisation décrit.

Lors de l'étape E2, suite à la détection de la fin de la transaction, le module sans contact envoie au navigateur Web 110 du terminal mobile, lors d'une étape E310, une information de détection de fin de transaction. Cette information est une commande permettant de lancer le navigateur Web du terminal mobile. Elle contient, en paramètre, l'adresse d'un programme PAP1 de la carte d'abonné. La commande permettant de lancer le navigateur est soit stockée dans le module sans contact, soit transmise à celui-ci par l'application AP1 avec l'adresse du programme PAP1. L'adresse PAP1, qui est l'adresse d'une application liée à l'application AP1 sélectionnée, est fournie par l'application AP1 au module sans contact en fin de transaction suite à la réception par la carte d'abonné d'une commande transmise par le module sans contact. Plus précisément et à titre d'exemple, suite à la détection de la fin de transaction, le module sans contact transmet un ordre "Deselect Event" au module de réception de la carte d'abonné (SWP Handler) qui renvoie une commande "Deselect APDU" à l'application AP1. Suite à la réception de cette commande, l'application AP1 renvoie au module sans contact l'adresse PAP1.
Sur réception de l'information de détection de fin de transaction, lors d'une étape E312, le navigateur, via le SCWS, s'adresse à la carte et le programme PAP1 s'exécute. Plus précisément, l'adresse du programme PAP1 est une url correspondant à un programme de la carte d'abonné spécifique à l'application sélectionnée.
Cette étape est suivie des étapes E320 et E324, similaires aux étapes E220 et E224 du premier mode de réalisation.
Dans les deux modes de réalisation décrits ci-dessus, le module sécurisé est une carte d'abonné 20 et le dialogue entre le terminal mobile et la carte d'abonné utilise un navigateur Web. A titre d'alternative, et notamment dans le cas où le module sécurisé est une zone mémoire du terminal mobile, le dialogue s'effectue, de façon connue, par l'interface entre le module sans contact et le module principal du terminal mobile (interface NFC chip-Digital Base Band). Ainsi, en fin de transaction, une commande de type Launch permet de lancer le programme (PG, PAP1) Dans le cas particulier où les applications sont des applications Java, on utilise, par exemple, l'API JSR 251 et la fonction "PushRegistry" définie dans les spécifications MIDP (pour "Mobile Information Device Profile") est utilisée pour réveiller/lancer l'application PAP1.

Selon un mode de réalisation choisi et représenté à la figure 6, un système mettant en oeuvre l'invention est constitué par exemple d'un terminal mobile 100 et d'une carte d'abonné 20.

Le terminal mobile 100 comporte de façon connue, notamment une unité de traitement 150 équipée d'un microprocesseur, une mémoire morte de type ROM 170, une mémoire vive de type RAM 190. Le terminal mobile 100 comporte un module sans contact 10 et peut comporter de manière classique et non exhaustive les éléments suivants: un clavier, un écran, un microphone, un haut-parleur, une interface de communication, un moyen de stockage. La mémoire morte 170 comporte des registres mémorisant un programme d'ordinateur comportant des instructions de programme adaptées d'une part à recevoir des ordres de commande en provenance du module sans contact et à les retransmettre à la carte d'abonné 20 et d'autre part à recevoir de la carte d'abonné des commandes d'interface homme machine et à les exécuter.

Le module de communication sans contact 10 comporte de façon connue un microprocesseur 11, un module d'émission réception 12 pour la communication avec la borne sans contact 200, un module d'émission réception 14 pour la communication avec l'application située dans le module sécurisé, un module d'émission réception 16 pour la communication avec le terminal mobile, une mémoire 15. Il comporte en outre un déclencheur 18. Lorsque le déclencheur 18 détecte une coupure de champ magnétique ou lorsque le module 16 reçoit un message de déconnexion émis par la borne 200, le microprocesseur 11 provoque l'envoi de l'information de détection de fin de transaction au terminal mobile.

Le système comporte également un module sécurisé 20. Ce module sécurisé 20 est par exemple une carte d'abonné qui comporte de façon connue, notamment une unité de traitement 21 équipée d'un microprocesseur, une mémoire morte de type ROM 22, une mémoire vive de type RAM 23, un module d'émission réception 25 pour communiquer avec le terminal mobile 100 et le module sans contact 10. La mémoire morte 22 comporte des registres mémorisant un ou plusieurs programmes d'ordinateur comportant des instructions de programme adaptées à exécuter une ou plusieurs applications (AP1, AP2, ...). Elle comporte également des registres mémorisant un programme d'ordinateur comportant des instructions de programme adaptées à mettre en oeuvre un procédé de transmission d'un message selon l'invention tel que décrit en référence aux figures 3 à 5. Ce programme est ainsi adapté à recevoir une information de détection de fin de transaction d'une application, à déterminer un message contenant une information identifiant l'application et une information de fin de transaction et à transmettre le message déterminé au terminal mobile.

Lors de la détection de la fin d'une transaction par le module sans contact, le terminal mobile transmet une information de fin de transaction à la carte d'abonné et le programme (PG, PAP1) stocké dans la mémoire morte 21 est transféré dans la mémoire vive qui contiendra alors le code exécutable de l'invention ainsi que des registres pour mémoriser les variables nécessaires à la mise en oeuvre de l'invention.

## Revendications

1. Procédé de communication d'un message concernant une transaction d'une application sans contact (AP1) effectuée entre un équipement (200) et un terminal mobile (100) équipé d'un module sans contact (10) et d'un module sécurisé (20), ladite application étant stockée dans ledit module sécurisé, ladite transaction étant initialisée par ledit équipement, ledit procédé comportant les étapes suivantes :
- entrée du terminal mobile dans un champ magnétique émis par l'équipement,
- réception par le module sans contact, en provenance de l'équipement d'un message (MS) de sélection contenant un identifiant (AID1) de l'application (AP1),
- transmission du message (MS) du module sans contact (10) au module sécurisé (20),
- lancement de l'application (AP1) par le module sécurisé (20),
- échange de messages (M1, M2, ..., Mn) entre l'application et l'équipement,
- détection (E1) de fin de transaction entre le terminal et l'équipement,
- suite à la détection de fin de transmition, obtention (E2) par une interface homme machine (120) du terminal mobile (10) d'un message contenant au moins une information identifiant ladite application et une information de fin de transaction,
- communication (E3) dudit message sur l'interface homme machine du terminal mobile,
**caractérisé en ce que** :
- la détection de fin de transaction est réalisée par le module sans contact, et
- l'étape d'obtention (E2) comporte les étapes suivantes :
■ envoi (E210-E212, E310-E312) du module sans contact (10) au module sécurisé (20) d'une information de détection de fin de transaction, ladite information permettant le lancement d'un programme (PAP1) du module sécurisé,
■ lancement dudit programme (PAP1),
■ détermination par ledit programme (PAP1) dudit message et transmission (E224, E324) par le programme dudit message et d'une commande de communication dudit message sur l'interface homme machine du terminal mobile.

2. Procédé selon la revendication 1, dans lequel la fin de transaction est détectée par le module sans contact par un déclencheur intégré audit module sans contact, la fin de transaction étant provoquée par une rupture du champ magnétique.

3. Procédé selon la revendication 1, dans lequel la fin de transaction est détectée par réception par le module sans contact d'un message de fin de transaction émis par l'équipement, ledit équipement maintenant le champ magnétique.

4. Procédé selon la revendication 1 dans lequel l'information de détection de fin de transaction contient l'identifiant (AID1) correspondant à ladite application (PAP1) associée à la transaction.

5. Procédé selon l'une des revendications 1 ou 4 dans lequel le module sécurisé est une carte d'abonné insérée dans ledit terminal.

6. Procédé selon l'une des revendications précédentes dans lequel l'information de fin de transaction comporte des données de l'application mises à jour suite à l'exécution de la transaction.

7. Procédé selon l'une quelconque des revendications précédentes dans lequel l'étape de communication est une étape d'affichage dudit message sur un écran du terminal mobile et/ou une étape de diffusion d'un message vocal contenant ledit message par un haut parleur du terminal mobile.

8. Procédé selon la revendication 1, comprenant en outre l'étape suivante, mise en oeuvre par le module sécurisé :
- identification (E214) de l'application (AP1), .

9. Procédé selon la revendication 8 dans lequel l'étape d'identification comporte une étape de lecture d'un identifiant mémorisé au cours de ladite transaction.

10. Procédé selon la revendication 8 ou 9 dans lequel l'information de fin de transaction comporte des données de l'application mises à jour suite à l'exécution de la transaction

11. Terminal mobile équipé d'un module sécurisé et d'un module sans contact agencé pour mettre en oeuvre le procédé de communication d'un message selon l'une des revendications 1 à 10.

12. Système comprenant un terminal mobile selon la revendication 11 et un équipement agencés pour mettre en oeuvre le procédé des revendications 1-10. .

## Patentansprüche

1. Verfahren zur Übermittlung einer Mitteilung betreffend eine Transaktion einer kontaktlosen Anwendung (AP1), die zwischen einer Ausrüstung (200) und einem mobilen Endgerät (100) durchgeführt wird, das mit einem kontaktlosen Modul (10) und mit einem gesicherten Modul (20) ausgestattet ist, wobei die Anwendung im gesicherten Modul gespeichert ist, wobei die Transaktion von der Ausrüstung initialisiert wird, wobei das Verfahren die folgenden Schritte aufweist:
- Eintritt des mobilen Endgeräts in ein von der Ausrüstung gesendetes Magnetfeld,
- Empfang durch das kontaktlose Modul, von der Ausrüstung kommend, einer Auswahlmitteilung (MS), die eine Kennung (AID1) der Anwendung (AP1) enthält,
- Übertragung der Mitteilung (MS) vom kontaktlosen Modul (10) zum gesicherten Modul (20),
- Start der Anwendung (AP1) durch das gesicherte Modul (20),
- Austausch von Mitteilungen (M1, M2, ..., Mn) zwischen der Anwendung und der Ausrüstung,
- Erfassung (E1) des Endes der Transaktion zwischen dem Endgerät und der Ausrüstung,
- nach der Erfassung des Transaktionsendes, Erhalt (E2) durch eine Mensch-Maschine-Schnittstelle (120) des mobilen Endgeräts (10) einer Mitteilung, die mindestens eine die Anwendung identifizierende Information und einer Information über das Transaktionsende enthält,
- Übermittlung (E3) der Mitteilung über die Mensch-Maschine-Schnittstelle des mobilen Endgeräts,
**dadurch gekennzeichnet, dass**:
- die Erfassung des Transaktionsendes vom kontaktlosen Modul ausgeführt wird, und
- der Schritt des Erhalts (E2) die folgenden Schritte aufweist:
• Senden (E210-E212, E310-E312) vom kontaktlosen Modul (10) an das gesicherte Modul (20) einer Erfassungsinformation des Transaktionsendes, wobei die Information den Start eines Programms (PAP1) des gesicherten Moduls erlaubt,
• Start des Programms (PAP1),
• Bestimmung durch das Programm (PAP1) der Mitteilung und Übertragung (E224, E324) durch das Programm der Mitteilung und eines Übermittlungsbefehls der Mitteilung über die Mensch-Maschine-Schnittstelle des mobilen Endgeräts.

2. Verfahren nach Anspruch 1, wobei das Transaktionsende durch das kontaktlose Modul durch einen in das kontaktlose Modul integrierten Auslöser erfasst wird, wobei das Transaktionsende durch eine Unterbrechung des Magnetfelds bewirkt wird.

3. Verfahren nach Anspruch 1, wobei das Transaktionsende durch Empfang durch das kontaktlose Modul einer Mitteilung über das Transaktionsende, die von der Ausrüstung gesendet wird, erfasst wird, wobei die Ausrüstung das Magnetfeld aufrechterhält.

4. Verfahren nach Anspruch 1, wobei die Information über die Erfassung des Transaktionsendes die Kennung (AID1) enthält, die der der Transaktion zugeordneten Anwendung (AP1) entspricht.

5. Verfahren nach einem der Ansprüche 1 oder 4, wobei das gesicherte Modul eine in das Endgerät eingeführte Teilnehmerkarte ist.

6. Verfahren nach einem der vorhergehenden Ansprüche, wobei die Information über das Transaktionsende Daten der Anwendung enthält, die nach der Ausführung der Transaktion aktualisiert wurden.

7. Verfahren nach einem der vorhergehenden Ansprüche, wobei der Übermittlungsschritt ein Schritt der Anzeige der Mitteilung auf einem Bildschirm des mobilen Endgeräts und/oder ein Schritt der Verbreitung einer die Mitteilung enthaltenden Voice-Mail durch einen Lautsprecher des mobilen Endgeräts ist.

8. Verfahren nach Anspruch 1, das außerdem den folgenden Schritt enthält, der vom gesicherten Modul angewendet wird:
- Identifizierung (E214) der Anwendung (AP1).

9. Verfahren nach Anspruch 8, wobei der Identifizierungsschritt einen Schritt des Lesens einer Kennung aufweist, die während der Transaktion gespeichert wurde.

10. Verfahren nach Anspruch 8 oder 9, wobei die Information über das Transaktionsende Daten der Anwendung aufweist, die nach der Ausführung der Transaktion aktualisiert wurden.

11. Mobiles Endgerät, das mit einem gesicherten Modul und mit einem kontaktlosen Modul ausgestattet ist, das ausgebildet ist, um das Übermittlungsverfahren einer Mitteilung nach einem der Ansprüche 1 bis 10 anzuwenden.

12. System, das ein mobiles Endgerät nach Anspruch 11 und eine Ausrüstung enthält, die ausgebildet sind, um das Verfahren der Ansprüche 1 bis 10 anzuwenden.

## Claims

1. Method for communicating a message concerning a transaction of a contactless application (AP1) carried out between an item of equipment (200) and a mobile terminal (100) fitted with a contactless module (10) and a secure module (20), said application being stored in said secure module, said transaction being initialized by said item of equipment, said method comprising the following steps:
- entry of the mobile terminal into a magnetic field emitted by the item of equipment,
- reception by the contactless module, from the item of equipment, of a message (MS) of selection containing an identifier (AID1) of the application (AP1),
- transmission of the message (MS) from the contactless module (10) to the secure module (20),
- launching of the application (AP1) by the secure module (20),
- interchange of messages (M1, M2, ..., Mn) between the application and the item of equipment,
- detection (E1) of end of transaction between the terminal and the item of equipment,
- following the detection of end of transaction, obtaining (E2) by a man-machine interface (120) of the mobile terminal (10) of a message containing at least one item of information identifying said application and one item of information of end of transaction,
- communication (E3) of said message over the man-machine interface of the mobile terminal,
**characterized in that**:
- the detection of end of transaction is carried out by the contactless module, and
- the obtaining step (E2) comprises the following steps:
• sending (E210-E212, E310-E312) from the contactless module (10) to the secure module (20) of an item of information of detection of end of transaction, said item of information allowing the launching of a programme (PAP1) of the secure module,
• launching of said programme (PAP1),
• determination by said programme (PAP1) of said message and transmission (E224, E324) by the programme of said message and of a command to communicate said message over the man-machine interface of the mobile terminal.

2. Method according to Claim 1, in which the end of transaction is detected by the contactless module by a trigger integrated into said contactless module, the end of transaction being caused by a breakage of the magnetic field.

3. Method according to Claim 1, in which the end of transaction is detected by receipt by the contactless module of an end-of-transaction message emitted by the item of equipment, said item of equipment maintaining the magnetic field.

4. Method according to Claim 1, in which the item of information of detection of end of transaction contains the identifier (AID1) corresponding to said application (AP1) associated with the transaction.

5. Method according to one of Claims 1 and 4, in which the secure module is a subscriber card inserted into said terminal.

6. Method according to one of the preceding claims, in which the item of information of end of transaction comprises data of the application that are updated following the execution of the transaction.

7. Method according to any one of the preceding claims, in which the communication step is a step of displaying said message on a screen of the mobile terminal and/or a step of broadcasting a voice message containing said message by a speaker of the mobile terminal.

8. Method according to Claim 1, also comprising the following step carried out by the secure module:
- identification (E214) of the application (AP1).

9. Method according to Claim 8, in which the identification step comprises a step of reading an identifier stored during said transaction.

10. Method according to Claim 8 or 9, in which the item of information of end of transaction comprises data of the application that are updated following the execution of the transaction.

11. Mobile terminal fitted with a secure module and with a contactless module configured to use the method of communication of a message according to one of Claims 1 to 10.

12. System comprising a mobile terminal according to Claim 11 and an item of equipment configured to use the method of Claims 1 to 10.
